# EUROPÄISCHE PATENTANMELDUNG

(11) **EP 0 720 000 A1**
(43) Veröffentlichungstag der Anmeldung: **03.07.1996**
(21) Anmeldenummer: 95119269.9
(22) Anmeldetag: 07.12.1995
(51) Int. Cl.: G01B 3/20, G01B 7/14

(54) **Verfahren und Vorrichtung zur Fertigung von Fenstern, Türen oder dgl. Bauelementen**

(30) Priorität: 29.12.1994 DE 4447080
(71) Anmelder: Richert-Gruppe GmbH, D-49134 Wallenhorst (DE)
(72) Erfinder: Richert, Dietmar, D-49134 Wallenhorst (DE)
(74) Vertreter: Busse & Busse Patentanwälte

(57) **Zusammenfassung**

Ein Verfahren zur Fertigung von Fenstern, Türen oder dgl. Bauelementen mit Zuschneide- und dgl. Fertigungsmaschinen, wobei das Aufmaß einer Fensteröffnung oder dgl. Bauöffnung mittels eines Meßgerätes gemessen wird, die gemessenen Daten an die Dateneingabevorrichtung von elektronisch gesteuerten Zuschneide- und dgl. Fertigungsmaschinen eingegebenen werden und anhand der eingegebenen Daten eine weitgehend automatische Fertigung der Fenster oder dgl. Bauelemente erfolgt, wird im Sinne einer arbeitssparenden, insbesondere aber auch fehlersicheren Arbeitsweise so ausgestaltet, daß die Meßdaten elektronisch in einer vorgegebenen Folge in einen dem Meßgerät zugeordneten Speicher eingelesen werden, aus dem sie abgerufen und dann an die Dateneingabevorrichtung der Zuschneide- und dgl. Fertigungsmaschinen eingelesen werden.

## Beschreibung

Die Erfindung bezieht sich auf ein Verfahren zur Fertigung von Fenstern, Türen und dgl. Bauelementen nach dem Oberbegriff des Anspruchs 1 sowie ein Meßgerät zur Durchführung des Verfahrens nach dem Oberbegriff des Anspruchs 7.

Um für eine Fensteröffnung in einem Haus ein Fenster anzufertigen, ist es bekannt, daß ein Außendienstmann mittels eines Meßstabes die Aufmaßdaten der Fensteröffnung ermittelt und die jeweils gemessenen Werte aufgelistet oder in ein Meßblatt überträgt. Dieses Meßblatt wird dann an das Fertigungsbüro weitergeleitet, wo diese Meßdaten dann manuell nochmals in eine Fertigungsliste übertragen werden, um dann diese Daten in die Dateneingabevorrichtung der entsprechenden elektronisch gesteuerten Zuschneide- und dgl. Fertigungsmaschinen einzugeben. Durch diese mehrmalige manuelle Übertragung der Meßdaten entsteht ein erheblicher Zeitverlust und darüber hinaus können Übertragungsfehler auftreten, die zur Fertigung falsch bemaßter Fenster führen und somit die Herstellungskosten der Fenster insgesamt in die Höhe treiben.

Aufgabe der Erfindung ist es daher, den Datenfluß von dem Meßort bis zu den Zuschneide- und dgl. Fertigungsmaschinen effektiver, einfacher, zuverlässiger und zeitsparender zu gestalten.

Diese Aufgabe wird von einem Verfahren nach dem Oberbegriff des Anspruch 1 ausgehend mit den kennzeichnenden Merkmalen des Anspruchs 1 gelöst.

Nach der Erfindung werden die mittels eines Meßgerätes gemessenen Meßdaten elektronisch in einer vorgegebenen Folge in einen Speicher, der dem Meßgerät zugeordnet ist, eingelesen, aus diesem abgerufen und dann in die Dateneingabevorrichtung der Zuschneide- und dgl. Fertigungsmaschinen eingelesen. Nach dem Einlesen der Meßdaten in den Speicher findet ein manueller Eingriff in der Form der Übertragung der Meßdaten auf Meßblätter und dgl. nicht mehr statt, so daß die exakt gemessenen Aufmaßdaten einer Fensteröffnung auf direktem Weg in die Dateneingabevorrichtung der Zuschneide- und dgl. Fertigungsmaschinen eingegeben und somit Übertragungsfehler bei der Datenübermittlung vermieden werden.

Vorteilhafterweise werden die gemessenen Daten in einen in dem Meßgerät gelagerten Speicher eingelesen, so daß auf zusätzliche Datenübertragungswege zwischen Meßgerät und Speicher verzichtet werden kann.

Zweckmäßigerweise können die gemessenen Aufmaßdaten einer Fensteröffnung oder dgl. aus dem Speicher zunächst in ein Datenverarbeitungsgerät eingelesen werden, das sich auf der Baustelle selbst befindet und transportabel ausgebildet ist, beispielsweise ein Notebook oder Laptop. Dieses Datenverarbeitungsgerät kann Programme enthalten, mit denen die ermittelten Aufmaßdaten der Fensteröffnung zu einem Datenpaket weiterverarbeitet werden. Auch ist es möglich, daß die Daten mehrerer Fensteröffnungen miteinander kombiniert werden, so daß beispielsweise ein Datenpaket erstellt wird, das sämtliche zu erstellenden Fenster eines Hauses kennzeichnet. Hierdurch kann bereits auf der Baustelle eine zweckmäßige Aufbereitung der gemessenen Daten erfolgen.

Insbesondere kann vorgesehen werden, daß das transportable Datenverarbeitungsgerät Typenprogramme enthält, die beispielsweise verschiedene Konstruktions- und Designvarianten von Fenstern und dgl. Bauelementen enthalten, wie die Farbe des Fensters, das Material, die Zahl der Flügel etc. Diese Daten können abgerufen und den Meßdaten zugeordnet werden, so daß ein Datenpaket entsteht, das die genaue Konstruktion eines spezifischen Fensters für eine Fensteröffnung kennzeichnet.

Darüber hinaus kann vorgesehen werden, die Aufmaßdaten einer Fensteröffnung oder dgl. mit einer Adresse zu versehen, die während des gesamten Fertigungsprozesses beibehalten wird, so daß auch bei der Zuordnung des herzustellenden Fensters und der späteren Lieferadresse keine Übertragungsfehler auftreten können.

Bevorzugtermaßen erfolgt das Einlesen der gemessenen Meßdaten vom Speicher des Meßgerätes in das transportable Datengerät über Funk. Hierdurch kann auf Anschlußkabel verzichtet werden, da diese auf einer Baustelle sehr hinderlich sind.

Die erfindungsgemäße Aufgabe wird weiter von einem Meßgerät nach dem Oberbegriff des Anspruchs 7 ausgehend mit den kennzeichnenden Merkmalen des Anspruchs 7 gelöst.

Nach der Erfindung ist zur Durchführung des Verfahrens ein Meßgerät, das mit einer Meßeinheit zur Ermittlung von Längenmaßen und einer elektronischen Einrichtung zur Umwandlung der Meßdaten in digitalisierte Werte ausgestattet ist, vorgesehen. Das Meßgerät umfaßt einen Speicher für die digitalisierten Meßdaten, aus dem sie abrufbar sind und dann in die Dateneingabevorrichtung der Zuschneide- und dgl. Fertigungsmaschinen eingelesen werden können.

Bevorzugterweise ist vorgesehen, daß das Meßgerät einen Sender aufweist, so daß die Daten per Funk an die Dateneingabevorrichtung der Zuschneide- und dgl. Fertigungsmaschinen oder aber auch zunächst an das elektronische Datenverarbeitungsgerät gesendet werden können.

Vorteilhafterweise handelt es sich bei dem Sender um einen UKW-Sender.

Weiterhin ist vorteilhafterweise vorgesehen, daß die Meßeinheit des Meßgerätes als ein mechanisch ausziehbarer Teleskopstab ausgebildet ist, so daß die Ermittlung der Längenmaße in herkömmlicher Weise mechanisch erfolgt.

Allerdings kann die Meßeinheit des Meßgeräts auch als Ultraschallmeßvorrichtung ausgebildet sein, falls eine auf einem Ultraschallverfahren beruhende Ermittlung von Längenmaßen zweckmäßig ist.

Desweiteren könnte die Meßeinheit des Meßgeräts einen Infrarotsensor umfassen, um mittels Infrarotstrahlung die jeweiligen Längenmaße zu bestimmen.

Darüber hinaus ist es auch denkbar, daß das Meßgerät eine optische Meßvorrichtung beinhaltet, die beispielsweise einen Halbleiterlaser und Photodioden zur Detektion des zurückgestreuten Lichts umfaßt, und die gleichfalls zur Ermittlung von Längenmaßen geeignet ist.

Ein Ausführungsbeispiel ist in der Zeichnung dargestellt und wird im Folgenden näher erläutert. Die Zeichnung zeigt eine schematische Darstellung eines Meßgerätes nach der Erfindung.

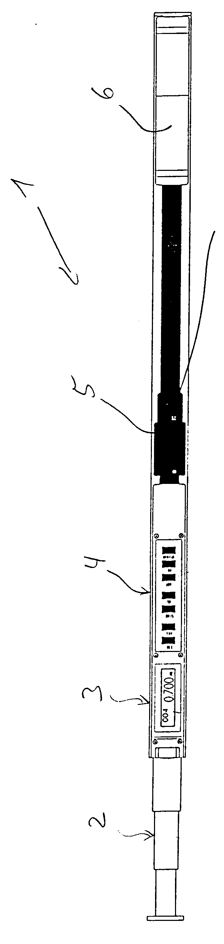

Die Fig. 1 zeigt ein allgemein mit 1 bezeichnetes Meßgerät zur Ermittlung von Längenmaßen. Das Meßgerät 1 ist hier als elektronischer Meßstab ausgebildet, der einen mechanisch ausziehbaren Teleskopstab 2 umfaßt, der entsprechend der zu messenden Längenmaße der jeweiligen Fensteröffnung ausgezogen werden kann. Die gemessenen Meßdaten werden mittels einer hier nicht näher dargestellten elektronischen Einrichtung in digitalisierte Werte umwandelt, die dann mittels einer elektronischen Anzeige 3 angezeigt werden.

Desweiteren umfaßt der elektronische Meßstab einen hier nicht dargestellten Speicher, in dem die Meßdaten gespeichert werden. Die Meßdaten sind mittels einer Bedientastatur 4 aus dem Speicher abrufbar und können mittels eines Senders 5, der im UKW-Bereich arbeitet, an eine Empfängerstation gesendet werden. Desweiteren zeigt die Zeichnung ein Batteriefach 6, in dem die Batterien zur elektrischen Versorgung der elektronischen Bauelemente des Meßstabes untergebracht sind.

Das Verfahren zur Fertigung von Fenstern sei nun im Folgenden erläutert:
Die Aufmaßdaten einer Fenster- oder dgl. Bauöffnung werden mit dem Meßgerät 1 mechanisch - oder mittels eines anderen zugrundeliegenden Verfahrens, sei es optisch, mit Hilfe von Infrarotstrahlung oder mit Ultraschall - gemessen und in den Speicher des Meßgerätes eingelesen und gespeichert. Aus diesem werden sie dann abgerufen und mittels des Senders 5 an ein Datenverarbeitungsgerät, das sich auf der Baustelle befindet, gesendet.

Diese Meßdaten können dann in dem Datenverarbeitungsgerät mittels eines entsprechenden Programms hinsichtlich spezieller Konstruktions- und Designvarianten ergänzt werden, so daß schließlich ein Datenpaket entsteht, daß das gesamte zu erstellende Fenster kennzeichnet. Darüber hinaus kann dieses Datenpaket mit einer Adresse versehen werden, so daß eine feste Zuordnung zwischen dem zu erstellenden Fenster und dem jeweiligen Haus hergestellt ist.

Dieses Datenpaket kann dann beispielsweise mittels Telefonmodem oder einer Datenstandleitung an die Dateneingabevorrichtung der Zuschneide- und Fertigungsmaschinen in dem jeweiligen Fensterherstellungsbetrieb weitergeleitet werden; es ist aber auch denkbar, daß dieses Datenpaket zunächst an einem zentralen Betriebsrechner weitergeleitet wird. Hier können die Datenpakete verschiedener Fenster oder auch Häuser miteinander kombiniert werden, um so einen bezüglich der Steuerung optimierten Fertigungsprozeß zu erhalten. Die derart aufbereiteten Daten, beispielsweise hinsichtlich der Aufteilung von großen Glasflächen, werden dann an die Dateneingabevorrichtung der Zuschneide- und dgl. Fertigungsmaschinen weitergeleitet.

Insgesamt ist somit ein Datenfluß beginnend von der Ermittlung der Aufmaßdaten der jeweiligen Fensteröffnung oder Bauöffnung bis zur Erstellung des Fensters oder Bauelements geschaffen, bei dem ein manueller Zugriff auf die gemessenen Aufmaßdaten des Fensters unterbunden ist, so daß Übertragungsfehler vermieden sind.

## Patentansprüche

1. Verfahren zur Fertigung von Fenstern, Türen oder dgl. Bauelementen mit Zuschneide- und dgl. Fertigungsmaschinen, wobei das Aufmaß einer Fensteröffnung oder dgl. Bauöffnung mittels eines Meßgerätes (1) gemessen wird, die gemessenen Daten an die Dateneingabevorrichtung von elektronisch gesteuerten Zuschneide- und dgl. Fertigungsmaschinen eingegebenen werden und anhand der eingegebenen Daten eine weitgehend automatische Fertigung der Fenster oder dgl. Bauelemente erfolgt, dadurch gekennzeichnet, daß die Meßdaten elektronisch in einer vorgegebenen Folge in einen dem Meßgerät (1) zugeordneten Speicher eingelesen werden, aus dem sie abgerufen und dann an die Dateneingabevorrichtung der Zuschneide- und dgl. Fertigungsmaschinen eingelesen werden.

2. Verfahren nach Anspruch 1, dadurch gekennzeichnet, daß die Meßwerte in einen im Meßgerät (1) gelagerten Speicher eingelesen werden.

3. Verfahren nach Anspruch 1 oder 2, dadurch gekennzeichnet, daß die gemessenen Daten aus dem Speicher zunächst in ein bauseitiges transportables Datenverarbeitungsgerät eingelesen werden, und daß diese Daten im Datenverbeitungsgerät zu einem das Fenster oder dgl. Bauelement und gegebenenfalls mehrere Bauelemente kennzeichnenden Datenpaket weiterverarbeitet werden.

4. Verfahren nach Anspruch 3, dadurch gekennzeichnet, daß das transportable Datenverarbeitungsgerät den Meßdaten weitere nach vorgegebenen Typenprogrammen sich ergebende Kennzeichnungsdaten zuordnet.

5. Verfahren nach einem der Ansprüche 1 bis 4, dadurch gekennzeichnet, daß die gemessenen Aufmaßdaten einer Fensteröffnung oder dgl. Bauöffnung mit einer Adresse versehen werden, die während des gesamten Fertigungsprozesses des Fensters oder Bauelements beibehalten wird.

6. Verfahren nach einem der Ansprüche 2 bis 5, dadurch gekennzeichnet, daß das Einlesen der gespeicherten Meßdaten in das transportable Datenverarbeitungsgerät über Funk erfolgt.

7. Meßgerät zur Durchführung des Verfahrens nach einem der Ansprüche 1 bis 6 mit einer Meßeinheit zur Ermittlung von Längenmaßen und einer elektronischen Einrichtung zur Umwandlung der Meßdaten in digitalisierte Werte, gekennzeichnet durch einen elektronischen Speicher für die digitalisierten Meßdaten.

8. Meßgerät nach Anspruch 7, gekennzeichnet durch ein Element zum Abrufen der digitalisierten Meßdaten.

9. Meßgerät nach Anspruch 8, gekennzeichnet durch einen Sender (5) zum Senden der abgerufenen Meßdaten.

10. Meßvorrichtung nach Anspruch 9, dadurch gekennzeichnet, daß der Sender (5) ein UKW-Sender ist.

11. Meßgerät nach einem der Ansprüche 7 bis 10, dadurch gekennzeichnet, daß die Meßeinheit zur Ermittlung von Längenmaßen ein mechanisch ausziehbarer Teleskopstab (2) ist.

12. Meßgerät nach einem der Ansprüche 7 bis 10, dadurch gekennzeichnet, daß die Meßeinheit zur Ermittlung von Längenmaßen eine Ultraschallmeßvorrichtung ist.

13. Meßgerät nach einem der Ansprüche 7 bis 10, dadurch gekennzeichnet, daß die Meßeinheit zur Ermittlung von Längenmaßen einen Infrarotsensor umfaßt.

14. Meßgerät nach einem der Ansprüche 1 bis 10, dadurch gekennzeichnet, daß die Meßeinheit zur Ermittlung von Längenmaßen eine optische Meßvorrichtung ist.
